# EUROPEAN PATENT APPLICATION

(11) **EP 2 808 584 A1**
(43) Date of publication of application: **03.12.2014**
(21) Application number: 12866560.1
(22) Date of filing: 10.10.2012
(51) Int. Cl.: F16J 15/12, B01D 29/01, F01M 11/03, F16J 15/10

(54) **METAL SUBSTRATE GASKET WITH FILTER FUNCTION AND MANUFACTURING METHOD THEREFOR**

(30) Priority: 25.01.2012 JP 2012012802
(71) Applicant: NOK Corporation, Tokyo 105-8585 (JP)
(72) Inventor: ANZAI, Takanori, Fukushima 9640811 (JP); NAKAOKA, Shinya, Fukushima 9640811 (JP); ITO, Masaru, Fukushima 9640811 (JP); TANJI, Isao, Fukushima 9640811 (JP)
(74) Representative: TBK
(86) International application number: PCT/JP2012/076159
(87) International publication number: WO 2013/111394

(57) **Abstract**

Provided is a metal substrate gasket with a filter function that is easy to machine/assemble and is capable of reducing the number of parts as well as cost. To achieve said purpose, the metal substrate gasket with filter function, which is provided with a filter section in which holes have been drilled on a portion of the flat surface of the metal substrate and is provided with a sealing section around the filter section, is characterized in that in the sealing section, respective elastic rubber seals cover the two surfaces of the metal substrate in the thickness direction. The metal substrate gasket is also characterized in that a sealing bead section is formed in the metal substrate in the sealing section.

## Description

### BACKGROUND OF THE INVENTION

### Field of the Invention

The present invention relates to a metal substrate gasket with filter function which is provided with a filter function and a sealing function, and a manufacturing method of the same. The gasket according to the present invention is used, for example, in a related field of motor vehicle, or in a field of industrial equipment.

### Description of the Conventional Art

As a metal gasket 51 integrated with a filter for removing an impurity of an oil which is used in the motor vehicle or the industrial equipment, there has been conventionally proposed a metal gasket in which a metal plate (mesh) 52 having a filter hole processed by a press molding or an etching work is pinched by two seal members (rubber coat plates) 53 and 54 obtained by coating an elastic material to both surfaces of the metal plate, and is integrated by rivets 55 after laminating three sheets, as shown in Fig. 4 (refer to patent document 1).

An object and an effect of the prior art mentioned above exists in making attachment and detachment easy, reduction of working and assembling cost, improving a maintenance property in a market, and further reduction of the number of parts.

However, since the prior art mentioned above is the laminated structure having three metal plates, there is room for further improvement in all the points of the working and assembling, the number of parts and the cost.

### PRIOR ART DOCUMENT

### Patent Document

Patent Document 1: Japanese Unexamined Patent Publication No. 2002-81307

### SUMMARY OF THE INVENTION

### Problem to be Solved by the Invention

The present invention is made by taking the above points into consideration, and an object of the present invention is to provide a metal substrate gasket with filter function which can make a working and assembling process further easy and can further reduce the number of parts and a cost, and a manufacturing method of the same.

### Means for Solving the Problem

In order to achieve the object mentioned above, a metal substrate gasket with filter function according to a first aspect of the present invention is a metal substrate gasket with filter function, the metal substrate gasket comprising:
a filter portion to which holes are applied, the filter portion being provided in a part on a plane of the metal substrate; and
a seal portion which is provided around the filter portion,
wherein the seal portion is structured such that a rubber-like elastic body for sealing is attached to each of both surfaces in a thickness direction of the metal substrate.

Further, a metal substrate gasket with filter function according to a second aspect of the present invention is the metal substrate gasket with filter function described in the first aspect mentioned above, wherein the seal portion is structured such that a bead portion for sealing is formed in the metal substrate.

Further, a manufacturing method of a metal substrate gasket with filter function according to a third aspect of the present invention is a method of manufacturing the metal substrate gasket with filter function described in the first aspect or the second aspect mentioned above, the method comprising the steps of preparing a gasket raw material in which the rubber-like elastic body is attached to each of both surfaces in the thickness direction of the metal substrate, peeling the rubber-like elastic body from a position which is formed as the filter portion in the gasket raw material, and applying holes to the peeled position.

Further, a manufacturing method of a metal substrate gasket with filter function according to a fourth aspect of the present invention is a method of manufacturing the metal substrate gasket with filter function described in the first aspect or the second aspect mentioned above, the method comprising the steps of preparing the metal substrate, applying holes to a position which is formed as the filter portion in the metal substrate, and after coating the rubber-like elastic body to a position which is formed as the seal portion in the metal substrate.

Further, the metal substrate gasket according to the present invention provided with the structure mentioned above is constructed as one sheet structure of the metal substrate, and the one sheet metal substrate is provided with both of the filter portion which exerts the filter function, and the seal portion which exerts the sealing function. The filter portion has the holes which are applied partly onto the plane surface of the metal substrate. The seal portion has the rubber-like elastic body for sealing which is attached to each of both surfaces in the thickness direction of the metal substrate. The seal portion may have a bead portion for sealing which is formed in the metal substrate.

The metal substrate gasket of the structure mentioned above is manufactured as follows.

### <Manufacturing method 1>

(1) Prepare a gasket raw material in which the rubber-like elastic body is attached to each of both surfaces in the thickness direction of the metal substrate.
(2) Peel the rubber-like elastic body from a position which is formed as the filter portion in the gasket raw material.
(3) Applying holes to the peeled position.

### <Manufacturing method 2>

(1) Prepare the metal substrate.
(2) Applying holes to a position which is formed as the filter portion in the metal substrate.
(3) After coating the rubber-like elastic body to a position which is formed as the seal portion in the metal substrate.

The manufacturing methods 1 and 2 mentioned above are both easily worked and assembled.

### Effect of the Invention

The present invention achieves the following effects.

In other words, in the present invention, the gasket is constructed as the one sheet structure of the metal plate, and the one sheet metal plate is provided with both the filter portion which exerts the filter function, and the seal portion which exerts the sealing function as mentioned above. The filter portion has the holes which are applied partly onto the plane surface of the metal substrate. The seal portion has the rubber-like elastic body for sealing which is attached to each of both surfaces in the thickness direction of the metal substrate. Further, the seal portion may have the bead portion for sealing which is formed in the metal substrate. Therefore, according to the present invention, since the gasket is constructed by the one sheet structure of the metal plate, it is possible to more easily work and assemble the gasket, and it is possible to further reduce the number of parts and the cost.

### BRIEF EXPLANATION OF THE DRAWINGS

Fig. 1 is a plan view of a metal substrate gasket with filter function according to a first embodiment of the present invention;
Fig. 2 is an enlarged cross sectional view of a substantial part of the metal substrate gasket with filter function and an enlarged cross sectional view along a line A-A in Fig. 1;
Fig. 3 is a cross sectional view of a substantial part of a metal substrate gasket with filter function according to a second embodiment of the present invention; and
Fig. 4 is an exploded perspective view of a gasket according to a prior art.

### DETAILED DESCRIPTION OF PREFERRED EMBODIMENTS

The following embodiments are included in the present invention.
(a) Filter holes are processed by removing SOFT METAL (brand name) rubber in a filter necessary portion. In other words, in a metal gasket (SOFT METAL (brand name)) in which an elastic body is coated on both surfaces of the metal, the filter holes are processed by peeling the elastic body of the filter necessary portion by water jet and exposing the metal.
(b) The rubber (the elastic body) is after coated to the steel plate in which the filter holes are processed. In other words, the filter holes are processed to the metal, and the elastic body is after coated to a seal necessary portion. The elastic body applied portion may be constructed only by a top portion of the bead, or may be constructed by a whole surface except the filter portion.
(c) The metal substrate employs, for example, a stainless steel, a cold-rolled steel, a galvanized sheet iron, and an aluminum alloy sheet.
(d) The rubber-like elastic body may employ, for example, a synthetic rubber which includes at least one of a nitrile rubber, a styrene butadiene rubber, a fluorine-contained rubber, an acrylic rubber and a silicone rubber.
(e) According to the structure mentioned above, it is possible to reduce the number of parts in comparison with the three-layer laminated type, and it is possible to manufacture the filter integrated gasket at a low cost.

### Embodiment

Next, a description will be given of embodiments according to the present invention with reference to the accompanying drawings. Metal substrate gaskets with filter function shown below are all constructed by a metal substrate gasket integrated with a filter for removing impurity in an oil which is used in a motor vehicle or an industrial equipment.

### First embodiment

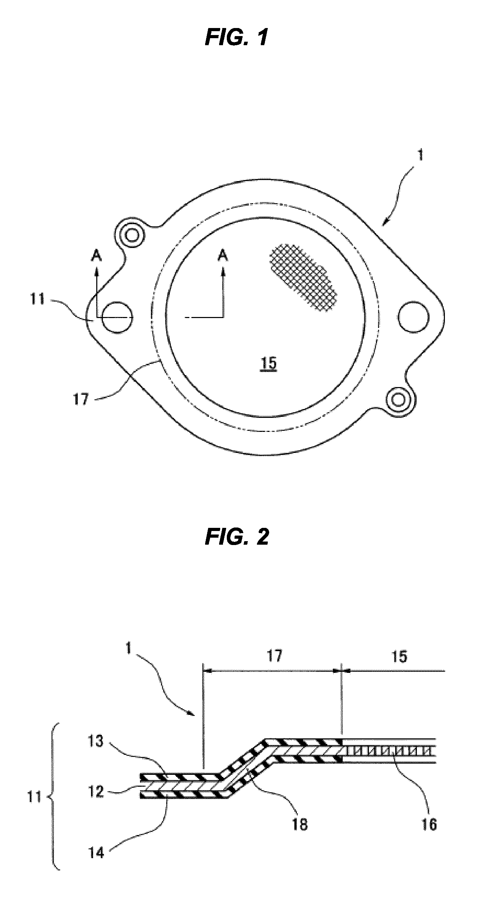

Fig. 1 shows a plan view of a metal substrate gasket 1 with filter function according to a first embodiment of the present invention, and Fig. 2 shows an enlarged cross section of a substantial part of the metal substrate gasket 1, that is, an enlarged cross section along a line A-A in Fig. 1.

As shown in Fig. 2, the metal substrate gasket 1 according to the embodiment is a gasket in which a filter portion 15 obtained by processing holes 16 for a filter is provided in a part on a plane surface (a center portion on the plane surface) of a metal substrate 12, and an annular seal portion 17 is provided in the periphery of the filter portion 15. In the seal portion 17, rubber-like elastic bodies 13 and 14 for sealing are respectively attached to both surfaces in a thickness direction of the metal substrate 12, each of the rubber-like elastic bodies 13 and 14 being formed as a film-like structure with a predetermined thickness. Further, a bead portion 18 for sealing is formed in the metal substrate 12, the bead portion 18 being formed as a half bead, a full bead or a trapezoidal bead. However, the bead portion 18 can be omitted.

The metal substrate gasket 1 having the structure mentioned above is manufactured as follows.
(1) Prepare a gasket raw material 11 in which the rubber-like elastic bodies 13 and 14 are respectively attached to both surfaces in the thickness direction of the metal substrate 12. The gasket raw material 11 can employ, for example, the SOFT METAL (brand name) in which the rubber-like elastic bodies are previously attached (coated) respectively to both surfaces in the thickness direction of the metal substrate, as it is. Since the SOFT METAL (brand name) is a seal raw material having a great plane area, the SOFT METAL is punched into a product shape according to a pressing method. The rubber-like elastic bodies 13 and 14 are attached to respective whole surfaces of both surfaces in the thickness direction of the metal substrate 12.
(2) The rubber-like elastic bodies 13 and 14 are peeled (removed) from the position which is set to the filter portion 15 in the gasket raw material 11 according to a shot blast method or a water jet method.
(3) The holes 16 are processed to the positions from which the rubber-like elastic bodies 13 and 14 are peeled in the metal substrate 12 according to the pressing method or an etching method.
(4) The bead portion 18 is formed in the metal substrate 12 at an appropriate timing according to the pressing method (the bead portion 18 can be formed at the same time as the punching time).

In the gasket 1 manufactured by the step mentioned above, the filter portion 15 in which the holes 16 are processed exerts a filter function, and the seal portion 17 to which the rubber-like elastic bodies 13 and 14 are attached and in which the bead portion 18 is formed exerts a sealing function. As a result, it is possible to exert both of the filter function and the sealing function. Since the gasket 1 is provided with only one metal substrate 12, the gasket 1 can be easily processed and assembled. Further, since only one metal substrate 12 is provided, the number of parts is reduced, and the gasket 1 is finished as a costly advantageous structure.

### Second embodiment

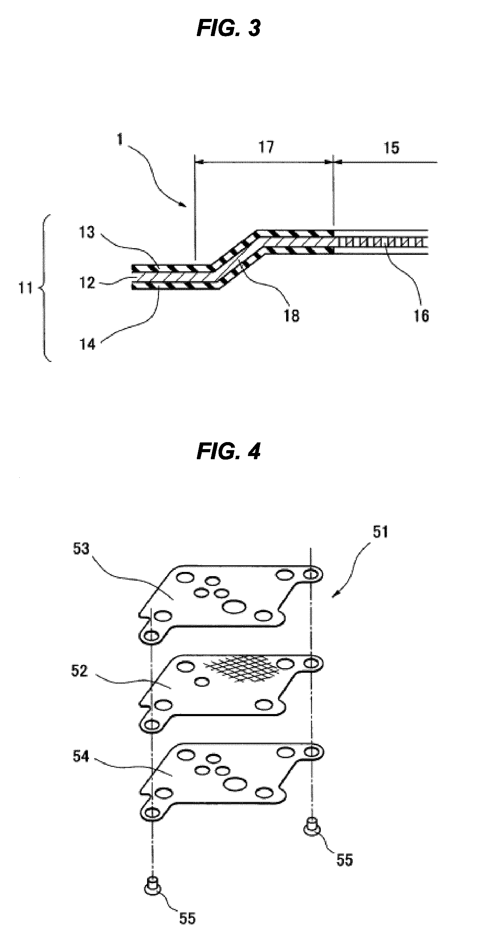

Fig. 3 shows a cross section of a substantial part of a metal substrate gasket 1 according to a second embodiment of the present invention.

The metal substrate gasket 1 according to the embodiment is a gasket in which a filter portion 15 obtained by processing holes 16 for a filter is provided in a part on a plane surface (a center portion on the plane surface) of a metal substrate 12, and an annular seal portion 17 is provided in the periphery of the filter portion 15. In the seal portion 17, rubber-like elastic bodies 19 and 20 for sealing are respectively attached to both surfaces in a thickness direction of the metal substrate 12, each of the rubber-like elastic bodies 19 and 20 being formed as a film-like structure with a predetermined thickness. Further, a bead portion 18 for sealing is formed in the metal substrate 12, the bead portion 18 being formed as a half bead, a full bead or a trapezoidal bead. However, the bead portion 18 can be omitted.

The metal substrate gasket 1 having the structure mentioned above is manufactured as follows.
(1) Prepare a gasket raw material which is constructed by an elementary substance. The gasket raw material can employ, for example, a metal plate raw material. Since the metal plate raw material is generally a raw material having a great plane area, the metal plate raw material is punched into a product shape according to a pressing method. The rubber-like elastic body is not attached to the metal substrate 12.
(2) The holes 16 are processed in the position which is set to the filter portion 15 in the metal substrate 12, according to the pressing method or an etching method.
(3) The rubber-like elastic bodies 19 and 20 are after coated respectively to both surfaces in the thickness direction of the position which is set to the seal portion 17 in the metal substrate 12. The after coating may be applied to a whole surface except the filter portion 15 (a whole surface of each of both surfaces in the thickness direction).
(4) Further, the bead portion 18 is formed in the metal substrate 12 at an appropriate timing according to the pressing method (the bead portion 18 can be formed at the same time as the punching time).

In the gasket 1 manufactured by the step mentioned above, the filter portion 15 in which the holes 16 are processed exerts a filter function, and the seal portion 17 to which the rubber-like elastic bodies 19 and 20 are attached (after coated) and in which the bead portion 18 is formed exerts a sealing function. As a result, it is possible to exert both of the filter function and the sealing function. Since the gasket 1 is provided with only one metal substrate 12, the gasket 1 can be easily processed and assembled. Further, since only one metal substrate 12 is provided, the number of parts is reduced, and the gasket 1 is finished as a costly advantageous structure.

### Description of Reference Numerals

- 1: metal substrate gasket
- 11: gasket raw material
- 12: metal substrate
- 13, 14, 19, 20: rubber-like elastic body
- 15: filter portion
- 16: holes
- 17: seal portion
- 18: bead portion

## Claims

1. A metal substrate gasket with filter function, the metal substrate gasket comprising:
a filter portion to which holes are applied, the filter portion being provided in a part on a plane of the metal substrate; and
a seal portion which is provided around said filter portion,
wherein said seal portion is structured such that a rubber-like elastic body for sealing is attached to each of both surfaces in a thickness direction of said metal substrate.

2. The metal substrate gasket with filter function according to claim 1, wherein said seal portion is structured such that a bead portion for sealing is formed in said metal substrate.

3. A method of manufacturing the metal substrate gasket with filter function according to claim 1 or 2, the method comprising the steps of:
preparing a gasket raw material in which said rubber-like elastic body is attached to each of both surfaces in the thickness direction of said metal substrate;
peeling said rubber-like elastic body from a position which is formed as said filter portion in said gasket raw material; and
applying holes to said peeled position.

4. A method of manufacturing the metal substrate gasket with filter function according to claim 1 or 2, the method comprising the steps of:
preparing said metal substrate;
applying holes to a position which is formed as said filter portion in said metal substrate; and
after coating said rubber-like elastic body to a position which is formed as said seal portion in said metal substrate.

## Amended claims

### Amended claims under Art. 19.1 PCT

1. (Deleted)

2. (Amended) A metal substrate gasket with filter function, the metal substrate gasket comprising:
a filter portion to which holes are applied, the filter portion being provided in a part on a plane of the metal substrate; and
a seal portion which is provided around said filter portion,
wherein said seal portion is structured such that a rubber-like elastic body for sealing is attached to each of both surfaces in a thickness direction of said metal substrate, and a bead portion for sealing is formed in said metal substrate.

3. (Amended) A method of manufacturing the metal substrate gasket with filter function according to claim 2, the method comprising the steps of:
preparing a gasket raw material in which said rubber-like elastic body is attached to each of both surfaces in the thickness direction of said metal substrate;
peeling said rubber-like elastic body from a position which is formed as said filter portion in said gasket raw material; and
applying holes to said peeled position.

4. (Amended) A method of manufacturing the metal substrate gasket with filter function according to claim 2, the method comprising the steps of:
preparing said metal substrate;
applying holes to a position which is formed as said filter portion in said metal substrate; and
after coating said rubber-like elastic body to a position which is formed as said seal portion in said metal substrate.

Statement under Art. 19.1 PCT

The invention according to claim 2 was certified as "Novelty: Yes", "Inventive step: Yes" and "Industrial applicability: Yes", in International Search Report.
The invention according to claim 3 was certified as "Novelty: Yes", "Inventive step: Yes" and "Industrial applicability: Yes", in International Search Report.
The invention according to claim 4 was certified as "Novelty: No" and "Inventive step: No", in International Search Report, however, this certification was deemed to be applied to the portion which depends on claim 1, and the portion depending on claim 2 should be certified as "Novelty: Yes" and "Inventive step: Yes".
